# FASCICULE DE BREVET EUROPEEN

(11) **EP 0 499 319 B1**
(45) Date de publication et mention de la délivrance du brevet: **20.09.1995**
(21) Numéro de dépôt: 92200326.4
(22) Date de dépôt: 06.02.1992
(51) Int. Cl.: G01S 3/784

(54) **Procédé de mesure de la position précise du centre énergétique d'une tache image d'un objet lumineux sur une détecteur photosensible**
Verfahren zur Messung der genauen Position des Energiezentrums eines Bildflecks eines lichtstrahlenden Gegenstandes auf einem Photosensor
Method for measuring the precise position of the energy centre of an image spot of a luminous object on a photosensor

(30) Priorité: 15.02.1991 FR 9101814
(43) Date de publication de la demande: 19.08.1992
(73) Titulaire: SOCIETE ANONYME D'ETUDES ET REALISATIONS NUCLEAIRES S.O.D.E.R.N., 94450 Limeil-Brevannes (FR); Philips Electronics N.V., 5621 BA Eindhoven (NL)
(72) Inventeur: Vilaire, Didier, Société Civile S.P.I.D., F-75008 Paris (FR); Pezant, Christian, Société Civile S.P.I.D., F-75008 Paris (FR)
(74) Mandataire: Pyronnet, Jacques

(56) Documents cités:
- EP-A- 0 297 665
- EP-A- 0 384 527
- US-A- 4 796 187
- IBM TECHNICAL DISCLOSURE BULLETIN, vol. 32, no. 11, Avril 1990, New York,US;pages 255 - 256; "Algorithm for detecting center of object by image processing"

## Description

La présente invention concerne un procédé de mesure de la position précise du centre énergétique d'une tache image d'un objet lumineux sur un détecteur photosensible constitué par une matrice de détection à transfert de charges, ladite image étant défocalisée pour permettre un mode de calcul barycentrique ultérieur de ladite position précise et le signal lumineux étant numérisé puis traité sous forme de pixels numériques, procédé selon lequel a) un champ de mesure qui constitue une fraction rectangulaire ou carrée de ladite matrice de détection est centré sur la position estimée de l'objet lumineux à partir d'une phase de mesure ou d'une phase de recherche juste précédente.

Une matrice de détection par transfert de charges est un dispositif à mosaïque photosensible qui, en réponse à un rayonnement lumineux incident, produit un signal vidéo consistant en une suite d'impulsions dont les amplitudes individuelles sont proportionnelles à la quantité d'énergie des photons dans chaque élément sensible du dispositif. Un tel dispositif est employé notamment dans des détecteurs à mosaïque utilisés dans des viseurs en astronomie et dans la technique spatiale comme chambre de prise de vues d'astres faibles (de grande magnitude).

Les détecteurs à mosaïque comportant un grande nombre d'éléments sensibles de la nouvelle génération sont combinés à des microprocesseurs à vitesse élevée pour réaliser des dispositifs et instruments de poursuite d'astres capables de suivre un astre en déplacement apparent rapide. Dans ces dispositifs destinés à des missions spatiales, il est essentiel que la position du centre énergétique d'une tache image sur la matrice de détection soit déterminée et enregistrée avec une grande précision, en fait une précision égale à une fraction d'élément d'image ou pixel. Une telle détection précise typiquement à un dixième du côté d'un pixel près, est qualifiée dans la suite du texte de phase de mesure.

Afin de réduire les temps de traitement pour la détermination de la position d'une étoile, on peut déterminer en premier lieu sa position approximative de façon à ne considérer, pour la mesure, qu'une zone limitée autour de la tache image. Cette phase préalable dite phase de recherche est effectuée sur une partie de la zone image de la matrice de détection appelée fenêtre de recherche et dont les dimensions dépendent de la position estimée de l'étoile et de l'incertitude associée comme décrit par exemple dans le document EP-A- 0 384 527.

La fenêtre de recherche constituant un sous-ensemble carré ou rectangulaire de la matrice de détection de l'ordre de quelques centaines de pixels, la zone encore plus limitée dont la position est déduite de la phase de recherche et sur laquelle sont appliqués les algorithmes de calcul est appelée champ de mesure. Le champ de mesure qui constitue lui-même un sous-ensemble généralement carré de la fenêtre de recherche, est rendu le plus petit possible et peut varier typiquement d'un motif de 4 fois 4 pixels à un motif carré pouvant compter plusieurs centaines de pixels. Le calcul de la position en phase de mesure peut être effectué par exemple comme décrit dans la demande de brevet français N° 2 625 396 selon laquelle est effectuée la consultation d'une mémoire contenant les positions précalculées du centre du signal lumineux en fonction des niveaux des signaux détectés sur les 5 pixels les plus proches du centre. La précision obtenue selon ce procédé et le dispositif qui lui est associé est égale au quart du côté d'un pixel.

La présente invention se propose d'obtenir une précision meilleure que celle indiquée ci-dessus et au moins égale à un dixième du côté d'un pixel et ceci en se basant sur un état de l'art différent de celui de la demande de brevet français précitée : le champ de mesure étant centré sur la position estimée de l'étoile, soit après une phase de recherche, soit après une phase de mesure juste antérieure, le calcul de la position est de façon connue effectué par le biais d'un calcul barycentrique effectué sur l'ensemble des pixels du champ de mesure dont les dimensions sont telles que tous les pixels illuminés par l'étoile visée et dont le niveau est significatif, c'est-à-dire supérieur au bruit de fond soient considérés. Lorsque l'incertitude sur la position de la tache image est grande, le champ de mesure est de ce fait grand lui aussi et un nombre important de pixels non significatifs est pris en compte ce qui dégrade la précision de mesure. On notera par ailleurs que pour améliorer la précison en phase de mesure il est connu de défocaliser légèrement la matrice de détection par rapport au viseur et ceci de façon permanente. La défocalisation optimale est telle que le diamètre apparent de l'étoile visée, quelle que soit sa magnitude, soit de l'ordre de 2 à 2,5 fois le côté d'un pixel.

Dans ce contexte, le problème technique précis qui se pose est d'obtenir à partir d'un calcul barycentrique une précision sur la position du centre de l'image de l'étoile visée qui soit meilleure que le dixième du côté d'un pixel tout en étant le moins possible entachée par le bruit présent dans le champ de mesure sous forme de pixels illuminés par des photons qui ne proviennent pas de l'étoile visée.

Ce but est atteint et les inconvénients de l'art antérieur consistant en une précision insuffisante sont atténués grâce au fait que le procédé défini en préambule est remarquable en ce que les opérations successives suivantes sont effectuées à chaque mesure :
b) un premier groupe d'un nombre prédéterminé NS de pixels de niveau le plus élevé environ égal au dixième du nombre de pixels du champ de mesure est sélectionné,
c) parmi les NS pixels, un autre groupe de NA pixels agglomérés au pixel de niveau maximal, c'est-à-dire un pixel contigu au pixel de niveau maximal ou avec un autre pixel lui-même directement ou indirectement contigu audit pixel de niveau maximal, est sélectionné,
d) un calcul barycentrique est effectué sur les NA pixels agglomérés du champ de mesure.

Le procédé selon l'invention revient à effectuer une double ségrégation consistant à écarter du calcul barycentrique d'une part les pixels de bruit de fort niveau mais n'appartenant pas à la tache image et par ailleurs à rejeter les pixels appartenant à la tache image mais dont le niveau n'est pas significatif par rapport au bruit de fond. Le procédé est particulèrement intéressant dans les cas limites de détection tels que : magnitude élevée de l'étoile, vitesse élevée, direction du défilement mal connue, voire inconnue. Le gain sur le bruit de mesure ainsi obtenu peut alors être supérieur d'un facteur 2 par rapport à une mesure sur un motif fixe. La valeur de NS est optimisée en fonction des caractéristiques de telle mission prévue pour tel satellite.

Selon un mode de réalisation préféré de l'invention pour ce qui est de la sélection des NS pixels, les NS premiers pixels lus du champ de mesure sont mis dans une zone mémoire de NS pixels dont chaque emplacement contient la valeur du pixel et ses coordonnées cartésiennes, puis le pixel suivant est comparé au plus petit parmi les pixels précédents et, au cas où il lui est supérieur, il le remplace dans ladite mémoire, sinon ledit pixel suivant est rejeté et la même opération est effectuée pour le pixel suivant, et ainsi de suite de façon récurrente jusqu'au dernier pixel lu du champ de mesure.

Ce mode de réalisation constitue un algorithme selon lequel les NS emplacements mémoire contiennent les NS pixels numériques de niveau le plus élevé du champ de mesure dans un ordre quelconque au sein de la zone mémoire. Selon d'autres algorithmes connus, ou selon un algorithme complémentaire, il est possible d'obtenir ces pixels rangés par ordre croissant ou décroissant au sein de la mémoire.

Selon un autre mode de réalisation préféré de l'invention, pour ce qui est de la sélection desdits NA pixels constituant le plus gros agglomérat, il est procédé à une exploration spirale du champ de mesure, centrée sur le pixel de niveau maximal, PI(1) qui appartient au groupe NA, moyennant les étapes suivantes :
p) il est déterminé par comparaison de coordonnées si le pixel exploré PI_{S} appartient audit premier groupe de NS pixels et dans la négative on passe à l'étape r,
q) dans l'affirmative la position du pixel PI_{S} est comparée à celles du (des) pixel(s) précédemment sélectionnés et, en cas de contiguïté avec l'un au moins de ces pixels, le pixel PI_{S} est retenu comme appartenant audit autre groupe de NA pixels, sa position est retenue comme origine d'une spire complète vierge de la spirale puis on passe à l'étape r ; en cas de non contiguïté, on passe directement à l'étape r,
r) pour chaque position successive de pixel exploré PI_{S} de la spirale il est testé si ce pixel marque la fin d'une spire complète, c'est-à-dire comprenant 1 tour plus 1 pixel sur la spirale, vierge, auquel cas l'exploration est terminée, et sinon on passe à la position de pixel suivante sur la spirale.

Pour chaque mesure précise de position d'étoile, une certaine durée est nécessaire pour effectuer les ségrégations de pixels comme indiqué ci-dessus. On notera que cette perte de temps est contrebalancée par la simplicité et la rapidité accrues du calcul barycentrique qui ne s'applique plus dès lors qu'à une petite minorité des pixels du champ de mesure.

La description qui suit en regard des dessins annexés, le tout donné à titre d'exemple, fera bien comprendre comment l'invention peut être réalisée.

La figure 1 est un schéma synoptique d'un dispositif pour la mise en oeuvre du procédé selon l'invention.

La figure 2 représente la partie de la matrice de détection appelée champ de mesure où se trouve la tache image.

La figure 3 est un organigramme d'un premier mode de réalisation préféré de l'invention.

La figure 4 est un organigramme d'un deuxième mode de réalisation préféré de l'invention, compatible avec celui de la figure 3.

En général, un viseur d'étoile comportant une matrice de détection à transfert de charges constituée de pixels, est destiné au contrôle d'attitude de satellites artificiels et, de ce fait, ne nécessite qu'un déplacement lent en rotation, adapté à la période de rotation sur une orbite. Dans le présent cas, l'invention s'applique de préférence à un satellite manoeuvrant. Une manoeuvre du satellite implique un mouvement en rotation notablement plus rapide que pour un simple contrôle d'attitude, la vitesse de déplacement angulaire étant typiquement égale à 0,5 degré par seconde pour une précision de mesure de l'ordre de 20 secondes d'arc en moyenne. Un tel déplacement se traduit par exemple par un déplacement de l'étoile visée de 9 r (r étant la longueur du côté d'un pixel) entre deux mesures successives espacées d'une seconde, la précision de mesure étant chaque fois égale à 0,1 r. Si le déplacement angulaire prévu couvre plusieurs dizaines de degrés, plusieurs étoiles qui constituent, sur la voûte céleste, un chemin préétabli dans un catalogue d'étoiles embarqué sur le satellite, sont utilisées pour effectuer la manoeuvre en question. A cet effet un positionnement grossier est établi par la centrale à inertie du satellite pour que l'image d'une étoile prédéterminée du chemin d'étoiles choisi, dite étoile A, se forme sur la matrice de détection, cette image étant légèrement défocalisée de façon à illuminer plusieurs pixels. Ensuite, une phase dite de recherche permet de localiser le pixel (ou bien un groupe carré de 4 ou 9 pixels) de niveau maximal éclairé par l'étoile A dans une fenêtre de recherche qui constitue un sous-ensemble de la matrice de détection. Ce (ces) pixel(s) de niveau maximal constitue(nt) la position estimée de l'étoile A. A ce stade, la manoeuvre du satellite peut s'effectuer par mesures successives de la position précise au dixième de pixel près des étoiles qui se succèdent sur le chemin d'étoiles précité, une étoile après l'autre. A la fin de la phase de recherche, le champ de mesure est centré sur la position estimée de la première étoile visée, c'est-à-dire l'étoile A. Le champ de mesure, plus petit que la fenêtre de recherche, est généralement carré et peut être aussi petit que 5 x 5 pixels.

Typiquement, le champ de mesure compte 10 x 10 à 15 x 15 pixels. De préférence, pour faciliter le centrage du champ de mesure sur une étoile, ce dernier compte un nombre impair de pixels, qu'il s'agisse de son côté ou de sa surface. Pour un champ de mesure petit, les champs de mesure successifs peuvent être disjoints d'une mesure à la suivante et les mesures doivent être rapprochées dans le temps ; par contre pour des fenêtres de 10 à 15 pixels en carré, les champs de mesure successifs peuvent être partiellement superposés. On en arrive ainsi, de mesure en mesure, à ce que l'image de l'étoile A sorte de la matrice et à centrer alors le champ de mesure suivant sur l'image d'une étoile B qui apparaît sur la matrice, l'étoile B étant l'étoile qui suit l'étoile A sur le chemin d'étoiles indiqué ci-dessus. On notera que, d'une mesure à la suivante, pour une étoile donnée, on recale le nouveau champ de mesure en le centrant sur un pixel dont la position est déduite de la position que l'on vient juste de mesurer, corrigée à partir de l'estimation du mouvement apparent de l'étoile qui est connu par ailleurs, pendant l'intervalle de temps entre deux mesures. Le contrôle d'orientation de satellite lors d'une manoeuvre décrit dans les phrases précédentes s'effectue de façon connue, de préférence en effectuant, pour chaque mesure, un calcul barycentrique portant jusqu'à présent sur tous les pixels du champ de mesure. Ceci permet d'obtenir, après un calcul assez long une précision de l'ordre de 0,1 r. Une précision nettement supérieure serait illusoire étant donné que d'autres facteurs empêchent d'obtenir (tout au moins pour l'instant) une précision supérieure. Ces facteurs sont en particulier : les défauts géométriques du viseur, les défauts de stabilité thermique et de stabilité du champ, les défauts de sensibilité des pixels.

La présente invention permet, tout en effectuant la mesure selon un calcul barycentrique connu d'obtenir, par ce calcul, une précision plus grande à partir d'un nombre de pixels utilisés pour le calcul moindre que selon l'art antérieur. Cet avantage général peut être exploité de différentes façons, toutes choses égales par ailleurs. Par exemple il devient possible de choisir un champ de mesure plus grand et d'espacer la durée entre mesures. Il devient aussi possible d'intégrer, dans le chemin d'étoiles précité, des étoiles de plus grande magnitude qu'auparavant ou des étoiles qui sont voisines d'étoiles de plus grande magnitude qu'elles-mêmes, ce qui permet de rendre plus réguliers et plus denses les chemins d'étoiles en question.

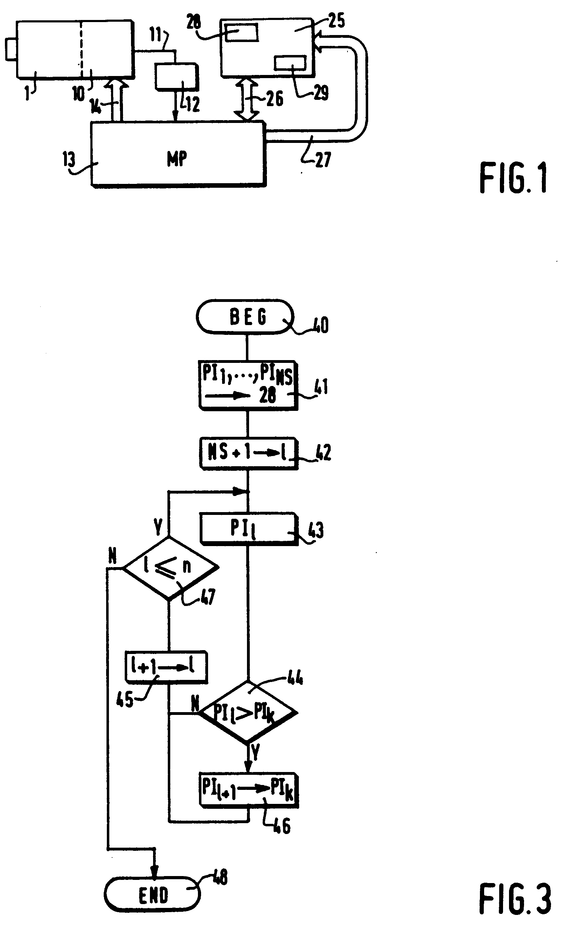

Sur la figure 1 on a représenté un viseur d'étoiles 1 muni d'une matrice de détection par transfert de charges 10. La lecture des pixels de la matrice 10 (avec ou sans zone mémoire) est effectuée de façon classique connue, c'est-à-dire pixel par pixel dans un étage de sortie (non représenté). Le signal est fourni sous forme analogique par un conducteur de sortie 11 à un convertisseur analogique-numérique 12 relié à un microprocesseur MP, 13. Le microprocesseur 13 commande, au moyen d'un bus de commande 14 l'ensemble (1, 10), les phases de commande de lecture de la matrice notamment ; il est d'autre part relié à une mémoire RAM 25 par un bus de données bidirectionnel 26 et par un bus d'adresses 27. En l'absence de plus amples explications, le schéma de la figure 1 est classique. Seules la structure et l'utilisation de la mémoire 25 sont originales et adaptées à l'invention, comme décrit ci-dessous. La matrice de détection 10 (non représentée), par exemple celle commercialisée par la Société Thomson-CSF sous la référence TH 7863, se présente comme une mosaïque d'éléments d'image divisée en deux parties : une première moitié, la zone photosensible, est destinée à recevoir et à détecter, pendant une phase dite d'intégration, le rayonnement lumineux venant de l'objet visé et la deuxième moitié, recouverte d'un film opaque, sert de mémoire de transfert à partir de laquelle s'effectue la lecture du signal sous forme analogique, pixel par pixel sur chaque ligne et ligne par ligne dans la trame, ou bien sous forme de groupes carrés de 4 ou 9 pixels.

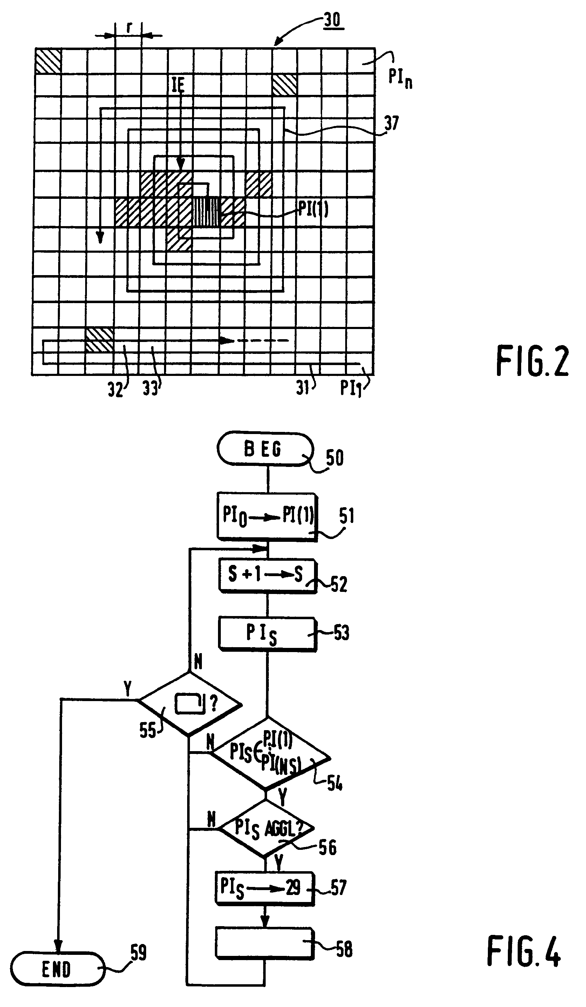

De la matrice 10 on a représenté, à la figure 2, le champ de mesure 30, contenant l'image d'une étoile IE à laquelle appartient le pixel de niveau maximal PI(1). Le champ de mesure compte 13 x 13 pixels et le fond, qui en fait partie, est constitué par les 48 pixels situés à la périphérie du champ de mesure. Ce fond, qui sert de bas niveau de référence pour la détermination de la valeur des pixels numériques dans le microprocesseur 13, est constitué par la valeur moyenne de ces 48 pixels constituant le périmètre. Lorsque le fond comporte des pixels dits de niveau le plus élevé, comme définis ci-dessous, ces pixels ne sont pas pris en compte pour le calcul de valeur moyenne. Outre le pixel PI(1) on peut compter 8 autres pixels agglomérés au maximum avec PI(1), qui sont hachurés dans un premier sens, et trois pixels isolés, hachurés en sens contraire dont l'un, au coin supérieur gauche, doit être éliminé du fond. L'ensemble de ces 12 pixels constitue un premier groupe de NS pixels de niveau le plus élevé PI(1), ..., PI(NS) par ordre de niveaux décroissants. Selon l'invention, ces NS pixels sont sélectionnés dans un premier temps, à chaque mesure. De plus, parmi les NS Pixels, un autre groupe plus restreint de NA pixels est sélectionné. Cet autre groupe, constituant un plus gros agglomérat de pixels, est celui qui contient le pixel maximum PI(1). Sur la figure 2, il s'agit du groupe constitué par PI(1) et les 8 pixels adjacents hachurés dans un premier sens. Un pixel est dit aggloméré s'il diffère d'un incrément de 1 au plus en x et/ou en y par rapport à un autre pixel lui-même aggloméré. Cette deuxième sélection consiste à éliminer, parmi les NS pixels de niveau le plus élevé ceux qui sont isolés, c'est-à-dire qui ont la plus grande probabilité d'être représentatifs de bruit dans le champ de mesure. On notera par ailleurs qu'un autre agglomérat de pixels qui est par exemple l'image d'une étoile moins brillante, peut exister mais qu'il se distingue du plus grand par le fait qu'il ne contient pas de pixel PI(1), de niveau le plus élevé. Le bruit a, statistiquement, un centre de gravité très proche du centre du champ de mesure. Par contre, la position précise du centre de l'image recherchée peut se situer expérimentalement à une distance significative du centre du champ de mesure. Ceci montre qu'il est très avantageux, pour gagner en précision, de s affranchir des pixels isolés dans le calcul barycentrique final, lors de chaque mesure.

La figure 3 est l'organigramme d'un mode de réalisation de l'étape de sélection du groupe de NS pixels de niveau le plus élevé. La mémoire RAM 25 (figure 1) comporte, selon l'invention, une zone particulière 28 de NS pixels. Chaque emplacement de la zone 28 contient la valeur du niveau d'un pixel et ses coordonnées cartésiennes en x et y. Le bloc 40 (BEG) marque le début du programme. Au bloc 41 les NS premiers pixels, PI₁, ..., PI_{NS}, sont stockés dans la zone mémoire 28 (on choisit par exemple NS = 16). La lecture du champ de mesure s effectue selon la ligne 31 de la figure 2. En 42 on fait l'égalité : NS+1 = 1 (pixel 32), l étant le numéro d'ordre du pixel en cours de traitement dans la trame selon la ligne 31 (figure 2). Au bloc 43, le pixel PI₁ est considéré pour la suite du traitement (pixel 32, figure 2). En 44 il est testé si PI₁ est plus grand que le plus petit (PIₖ) des pixels PI₁, ..., PI_{NS} (pixel d'ordre k, k≦NS). Sinon (N) on passe au bloc 45 auquel l est incrémenté d'une unité. Si oui (Y), le pixel PIₗ₊₁ remplace le pixel PIₖ dans la zone mémoire 28 (bloc 46) et on passe au bloc 45. Au bloc suivant 47, la valeur de l est comparée à n, qui est le nombre de pixels du champ de mesure (n = 169, figure 2). Pour l≦n (Y) on se reboucle sur le bloc 43 et le pixel suivant (33,...) est traité. Sinon (N), cela signifie qu'on vient de traiter le dernier pixel (PIₙ figure 2), et que la phase de sélection du premier groupe de NS pixels de niveau le plus élevé est terminée (passage au bloc 48 de fin de programme END). A ce stade, la zone mémoire 28 contient les NS pixels de niveau le plus élevé, soit le pixel PI(1) et les autres pixels hachurés dans l'exemple de la figure 2, ces pixels n'étant par ailleurs pas ordonnés selon leurs amplitudes. On peut prévoir, pour la réalisation des étapes suivantes du processus de mesure, que les NS pixels de niveau le plus élevé contenus dans la zone mémoire 28 sont, selon un sous-programme particulier complémentaire du microprocesseur 13, ré-ordonnés dans cette zone mémoire 28 ou une autre zone mémoire du plus grand PI(1) au plus petit PI(NS). Cette première sélection étant achevée, il est effectué une deuxième sélection d'un deuxième groupe de NA pixels agglomérés au maximum parmi les NS de niveau le plus élevé, par exemple comme décrit ci-dessous en référence aux figures 2 et 4.

A la figure 4, le bloc 50 (BEG) marque le début du programme. Au bloc 51, une spirale d'exploration 37 a son origine positionnée sur le pixel de niveau le plus élevé PI(1) (voir figure 2). Au bloc suivant, 52, le numéro d'ordre S du pixel à traiter sur la spirale 37 est incrémenté d'une unité (S+1 → S). En 53 le pixel PI_{S} est considéré pour la suite du traitement. On passe ensuite au bloc suivant 54 qui est un test consistant à déterminer si le pixel PI_{S} appartient ou non au premier groupe de NS pixels. Si non (N) on passe au bloc de test 55 décrit plus loin. Dans l'affirmative (Y) on passe au bloc de test suivant 56, où il est examiné si le pixel PI_{S} est lui-même aggloméré (contigu), c'est-à-dire si l'une au moins de ses coordonnées x ou y diffère d'au plus une unité d'un pixel précédemment retenu dans le groupe NA, soit au moins le pixel PI(1). Si non (N) on passe au bloc de test 55. Si oui (Y), le pixel PI_{S} est retenu comme appartenant au groupe NA aggloméré au maximum et stocké dans une zone mémoire 29 de la RAM 25 (figure 1) comme indiqué au bloc 57. Ce pixel marque aussi le début d'une spire vierge comme indiqué par le bloc 58. Après quoi on va au bloc de test 55 pour tester si le pixel PI_{S} marque la fin d'une spire complète vierge, c'est-à-dire une spire sur laquelle aucun signal dit : aggloméré au maximum, parmi les NS pixels, n'a été détecté. Si c'est le cas (Y) on passe au bloc 59 qui marque la fin du programme (END). Par spire complète, il faut entendre 1 tour plus 1 pixel sur la spirale 37. Le mode de réalisation qui vient d'être décrit est long mais exhaustif, c'est-à-dire qu'il permet d'écarter à coup sûr du deuxième groupe de NA pixels l'image d'une étoile éventuelle autre que l'étoile visée et comportant des pixels dont le niveau peut être supérieur à celui de certains pixels de l'étoile visée.

La dernière étape, connue, du procédé, consiste à effectuer, au moyen du microprocesseur 13, un calcul barycentrique sur les NA pixels agglomérés du champ de mesure, contenus ainsi que leurs positions, en zone mémoire 29. Le calcul barycentrique est effectué, sur les NA pixels, en retranchant au niveau de chaque pixel numérique le niveau de fond moyen mesuré sur le pourtour du champ de mesure.

Des variantes à la portée de l'informaticien moyen sont possibles pour la détermination du premier (NS) et de l'autre (NA) groupe de pixels.

Les modes de réalisation décrits ci-dessus donnent toute satisfaction lorsque le pas de quantification pour la mesure des valeurs des pixels est petit. Ainsi tous les pixels ou, à tout le moins, la majorité des pixels du champ de mesure, ont des valeurs différentes. Il s'ensuit que, quel que soit le sens d'exploration du champ de mesure, les mêmes NS pixels de niveau le plus élevé sont sélectionnés. Ceci n'est par contre plus le cas lorsque le pas de quantification est grand, de telle sorte que les valeurs des pixels peuvent être rangées selon des classes de valeurs, chaque classe comportant plusieurs pixels, au moins pour les pixels qui n'ont pas les niveaux les plus élevés. Après exploration, la classe de valeurs les plus faibles est le plus souvent incomplète et d'autre part cette classe incomplète est la seule qui ne constitue pas le même ensemble de pixels selon le sens d'exploration du champ de mesure. Cet effet nuisible, que l'on peut qualifier de biais algorithmique peut être supprimé en éliminant du premier groupe de NS pixels sélectionnés ceux qui appartiennent à la classe des niveaux les plus faibles, ce qui résulte en un deuxième groupe plus restreint de NX ce dernier nombre étant variable (non prédéterminé). Pour ne pas trop diminuer le nombre de pixels parmi lesquels l'autre groupe de NA doit ensuite être sélectionné, on peut prévoir d'augmenter le nombre NS, en prévision de l'ablation de la dernière classe de pixels, par rapport à la valeur indiquée plus haut ; par exemple, la valeur de NS peut être portée de 16 à 20. Une autre façon de décrire cette variante consiste à dire que tous les pixels dont le niveau est identique au niveau du dernier pixel retenu parmi les NS sont éliminés de sorte que les NX pixels finalement retenus forment des classes entières en niveau, le nombre NX étant de l'ordre du dixième des pixels appartenant au champ de mesure.

Le détecteur à transfert de charges décrit ci-dessus est, de façon classique, sensible aux photons dont la longueur d'onde se situe dans le spectre d'absorption du Silicium, soit 0,4 à 1,1 µ. Cependant, des dépôts ad hoc effectués sur la matrice de détection permettent de rendre cette dernière sensible aux rayons ultraviolets (bande des 0,25 µ à 0,4 µ). Il est aussi possible de réaliser des détecteurs à transfert de charges sensibles au rayonnement infrarouge, aux électrons ou aux rayons X.

La présente invention s'applique d'une façon générale à la détection de la position précise d'une source émissive dont une image a été formée sur la zone sensible d'un détecteur à transfert de charges, notamment au traquage d'un point chaud dans le domaine infrarouge et à la position récurrente de la position d'étoiles (ou de planètes) de magnitude élevée et à forte vitesse de défilement apparent en présence d'un niveau de fond important, auquel cas l'étalement de la tache image lié au temps d'intégration rend en effet le niveau du signal utile très proche du bruit de fond. Le viseur selon l'invention peut être utilisé aussi bien à terre, en association avec un télescope par exemple pour déterminer où pointe ce dernier sur la voûte céleste, qu'à bord d'un satellite artificiel pour déterminer son orientation, particulièrement lors d'une phase de manoeuvre, en appui de la centrale inertielle du satellite.

## Revendications

1. Procédé de mesure de la position précise du centre énergétique d'une tache image d'un objet lumineux sur un détecteur photosensible constitué par une matrice de détection par transfert de charges, ladite image étant défocalisée pour permettre un mode de calcul barycentrique ultérieur de ladite position précise et le signal lumineux étant numérisé puis traité sous forme de pixels numériques, procédé selon lequel a) un champ de mesure qui constitue une fraction rectangulaire ou carrée de ladite matrice de détection est centré sur la position estimée de l'objet lumineux à partir d'une phase de mesure ou d'une phase de recherche juste précédente, et caractérisé en ce que les opérations successives suivantes sont effectuées à chaque mesure :
b) un premier groupe d'un nombre prédéterminé NS de pixels de niveau le plus élevé environ égal au dixième du nombre de pixels du champ de mesure est sélectionné,
c) parmi les NS pixels, un autre groupe de NA pixels agglomérés au pixel de niveau maximal, c'est-à-dire un pixel contigu au pixel de niveau maximal ou avec un autre pixel lui-même directement ou indirectement contigu audit pixel de niveau maximal, est sélectionné,
d) un calcul barycentrique est effectué sur les NA pixels agglomérés du champ de mesure.

2. Procédé de mesure de position selon la revendication 1, caractérisé en ce que pour la sélection des NS pixels, les NS premiers pixels lus du champ de mesure sont mis dans une zone mémoire de NS pixels dont chaque emplacement contient la valeur du pixel et ses coordonnées cartésiennes, puis le pixel suivant est comparé au plus petit parmi les pixels précédents et, au cas où il lui est supérieur, il le remplace dans ladite mémoire, sinon ledit pixel suivant est rejeté et la même opération est effectuée pour le pixel suivant, et ainsi de suite de façon récurrente jusqu'au dernier pixel lu du champ de mesure.

3. Procédé de mesure de position selon la revendication 2, caractérisé en ce que les NS pixels de niveau le plus élevé sont comparés entre eux et réordonnés dans ladite mémoire de NS Pixels du plus grand PI(1) au plus petit PI(NS).

4. Procédé de mesure de position selon la revendication 1 ou 2, caractérisé en ce que pour sélectionner ledit autre groupe de NA pixels, il est procédé à une exploration spirale du champ de mesure, centrée sur le pixel de niveau maximal, PI(1) qui appartient au groupe NA, moyennant les étapes suivantes :
p) il est déterminé par comparaison de coordonnées si le pixel exploré PI_{S} appartient audit premier groupe de NS pixels et dans la négative on passe à l'étape r,
q) dans l'affirmative la position du pixel PI_{S} est comparée à celles du (des) pixel(s) précédemment sélectionnés et, en cas de contiguïté avec l'un au moins de ces pixels, le pixel PI_{S} est retenu comme appartenant audit autre groupe de NA pixels, sa position est retenue comme origine d'une spire complète vierge de la spirale puis on passe à l'étape r ; en cas de non contiguïté, on passe directement à l'étape r,
r) pour chaque position successive de pixel exploré PI_{S} de la spirale il est testé si ce pixel marque la fin d'une spire complète, c'est-à-dire comprenant 1 tour plus 1 pixel sur la spirale, vierge, auquel cas l'exploration est terminée, et sinon on passe à la position de pixel suivante sur la spirale.

5. Procédé de mesure de position selon lequel le pas de quantification est grand de façon que les valeurs des pixels peuvent être rangées selon des classes de valeurs, chaque classe comportant plusieurs pixels au moins pour les pixels qui n'ont pas les niveaux les plus élevés, selon l'une des revendications 1 à 4, caractérisé en ce qu'il comporte une étape supplémentaire b′) entre les étapes b) et c) :
b′) parmi les NS pixels un deuxième groupe de NX pixels est sélectionné, par suppresion, du groupe NS, des pixels appartenant à la classe de valeurs les plus faibles et que l'étape c) s'applique audit deuxième groupe de NX pixels.

6. Procédé de mesure de position selon l'une des revendications 1 à 5, caractérisé en ce que le fond qui constitue un bas niveau de référence pour la détermination de la valeur des pixels numériques est constitué par la valeur moyenne des pixels constituant le périmètre dudit champ de mesure.

7. Application du procédé de mesure de position selon l'une des revendications précédentes aux manoeuvres d'un satellite manoeuvrant.

## Patentansprüche

1. Verfahren zum Messen der genauen Position des Energiezentrums eines Bildflecks eines Hellengegenstands auf einem photoempfindlichen Detektor, der aus einer Ladungsübertragungs-Detektormatrix besteht, wobei das Bild defokussiert wird, um darauf eine baryzentrische Berechnungsart der genauen Position zu ermöglichen, und das Lichtsignal digitalisiert wird, wonach es in der Form digitaler Bildelemente bearbeitet wird, mit dem Verfahren a) ein Meßfeld, das ein rechteckiges Bruchteil oder ein viereckiges Bruchteil der Detektormatrix bildet, auf die geschätzte Position des Hellengegenstands zentriert wird, ausgehend von einer direkt vorangehenden Meßphase oder Untersuchungsphase, dadurch gekennzeichnet, daß die folgenden aufeinanderfolgenden Operationen in jeder Messung erfolgen:
b) es wird eine erste Gruppe einer vorgegebenen Anzahl von NS Bildelementen mit höherem Pegel ungefähr gleich einem Zehntel der Anzahl von Bildelementen des Metßfeldes gewählt,
c) aus den NS Bildelementen wird eine andere Gruppe umd das Bildelement mit höchstem Pegel angesammelter NA Bildelemente gewählt, d.h. ein Bildelement angrenzend an das Bildelement mit maximalem Pegel oder an ein anderes Bildelement selbst direkt oder indirekt angrenzend an dieses Bildelement mit höchstem Pegel,
d) es wird eine baryzentrische Berechnung an den angesammelten NA Bildelementen des Meßfeldes durchgeführt.

2. Verfahren zum Messen der Position nach Anspruch 1, dadurch gekennzeichnet, daß für die Wahl der NS Bildelemente, die NS ersten aus dem Meßfeld gelesenen Bildelemente in eine Speicherzone von NS Bildelementen eingeführt werden, deren einzelne Speicherstellen den Wert des Bildelements und seiner kartesischen Koordinaten enthalten, wonach das folgende Bildelement mit dem kleinsten der vorangehenden Bildelemente verglichen wird, und, wenn es einen höheren Wert hat, ersetzt es das letztgenannte Bildelement im Speicher, und wenn nicht, wird das folgende Bildelement abgelehnt und wird dieselbe Operation für das folgende Bildelement usw. bis zum letzten aus dem Meßfeld gelesenen Bildelement weiter fortgesetzt.

3. Verfahren zum Messen der Position nach Anspruch 2, dadurch gekennzeichnet, daß die NS Bildelemente mit höherem Wert miteinander verglichen und im Speicher der NS Bildelemente vom größten PI(1) bis zum kleinsten PI(NS) neugeordnet werden.

4. Verfahren zum Messen der Position nach Anspruch 1 oder 2, dadurch gekennzeichnet, daß zum Wählen der anderen Gruppe von NA Bildelementen eine spiralige Untersuchung des Meßfeldes durchgeführt wird, die auf das Bildelement mit höchstem Pegel PI(1) zentriert ist, die zur Gruppe NA gehört, wobei folgende Schritte benutzt werden:
p) durch den Vergleich der Koordinaten wird bestimmt, ob das untersuchte Bildelement PI_{S} zur ersten Gruppe von NS Bildelementen gehört, und im verneinenden Fall geht man zum Schritt r weiter,
q) im bejahenden Fall wird die Position des Bildelements PI_{S} mit denen des vorgewählten Bildelements (der vorgewählten Bildelemente) verglichen, und bei Angrenzung an wenigstens eines dieser Bildelemente, wird das Bildelement PI_{S} als zur anderen Gruppe von NA Bildelementen gehörig betrachtet, wird seine Position als ursprünglich von einer ganz leeren Windung der Spirale betrachtet, wonach man Schritt r weitergeht; bei Nichtangrenzung, geht man direkt zum Schritt r weiter,
r) für jede aufeinanderfolgende Position des untersuchten Bildelements PI_{S} der Spirale wird geprüft, ob dieses Bildelement das Ende einer ganz leeren Windung (d.h. mit 1 Windung plus 1 Bildelement auf der Spirale), markiert, in welchem Fall die Untersuchung beendet wird, und wenn nicht geht man zur Position des folgenden Bildelements auf der Spirale weiter.

5. Verfahren zum Messen der Position nach einem der Ansprüche 1 bis 4, unter Verwendung eines Qunatisierschrittes, der so groß ist, daß die Bildelementwerte nach Wertklassen eingeteilt werden können, wobei jede Klasse eine Anzahl von Bilelementen enthält, wewnigstens für die Bildelemente, die nicht die höchsten Pegel haben, dadurch gekennzeichnet, daß zwischen den Schritten b) und c) ein zusätzlicher Schritt b′) eingeführt wird:
b′) aus den NS Bildelementen wird eine zweite Gruppe von NX Bildelementen durch Unterdrücken von Bildelementen aus der Gruppe der NS Bildelemente, wobei die unterdrückten Bildelemente zur niedrigsten Wertklasse gehören, und daß der Schritt c) sich auf die zweite Gruppe der NX Bildelemente bezieht.

6. Verfahren zum Messen der Position nach einem der Ansprüche 1 bis 5, dadurch gekennzeichnet, daß der Hintergrund, der für die Bestimmung des Wertes der Digitalbildelemente einen niedrigen Pegel darstellt, mit dem mittleren Wert der Bildelemente gebildet wird, die die Peripherie des Meßfeldes darstellen.

7. Durchführung des Verfahrens zum Messen der Position nach einem oder mehreren der vorangehenden Ansprüche bei den Manövren eines manövrierenden Satelliten.

## Claims

1. A method of measuring the exact position of the energy centre of an image spot of a bright object on a photosensitive detector constituted by a charge transfer detection matrix, said image spot being defocused to allow a subsequent barycentric calculation mode of said exact position and the luminous signal being digitized and thereafter processed in the form of digital pixels, according to which method a) a measuring field forming a rectangular or square portion of said detection matrix is centred around the estimated position of the bright object determined in a measuring stage or a just preceding search stage, and characterized, in that the following consecutive operations are performed in each measurement:
b) selection of a first group of pixels NS of the highest level having a predetermined number of the order of one tenth of the number of pixels of the measuring field,
c) selection, from the NS pixels, of a further group of NA pixels clustered around the maximum level, that is to say, a pixel adjacent to the pixel of the maximum level or to another pixel itself directly or indirectly adjacent to said maximum-level pixel.
d) a barycentric calculation is performd on the clustered NA pixels of the measuring field.

2. A position measuring method as claimed in Claim 1, characterized, in that, for the detection of the NS pixels, the first NS pixels read from the measuring field are put in a memory area of NS pixels, whose individual locations contain the value of the pixel and its cartesian coordinates, thereafter the subsequent pixel is compared to the smallest of the preceding pixels and, when it has a higher value than said pixel, it replaces it in said memory, if not, said pixel is rejected and the same operation is repeated for the next pixel, and so forth up to the last pixel read from the measuring field.

3. A position measuring method as claimed in Claim 2, characterized, in that, the NS pixels with the highest level are compared to each other and are rearranged in said NS pixel memory from the highest PI(1) to the lowest PI(NS).

4. A position measuring method as claimed in Claim 1 or 2, characterized, in that, in order to select said further group of NA pixels, a helical exploration of the measuring field is performed, centred around the pixel with the maximum level, PI(1) which belongs to the group NA, using the following steps:
p) by comparing the coordinates, it is determined whether the explored pixel PS_{S} belongs to the said first group of NS pixels, and, if not, one proceeds to step r,
q) if it does, the position of the pixel PI_{S} is compared to the positions of the previously selected pixel(s) and, if there is contiguity with at least one of these pixels, the pixel PI_{S} is preserved as belonging to the said further group of NA pixels, its position is assumed to be the start of a completely empty turn of the helix, thereafter one proceeds to the step r ; if there is no contiguity, one proceeds directly to step r,
r) for each consecutive position of the explored pixel PI_{S} of the helix it is tested whether this pixel marks the end of a complete empty turn, that is to say, 1 turn plus 1 pixel of the turn, in which case the exploration is ended, if not, one proceeds to the position of the subsequent pixel on the helix.

5. A position measuring method as claimed in any one of Claims 1 to 4, using a quantization step which is so great that the pixel values can be arranged according to value classes, each class comprising a plurality of pixels, at least for the pixels which do not have the highest levels, characterized, in that, an additional step b′) is inserted between the steps b) and c) :
b′) from the NS pixels a second group of NX pixels is selected, by suppressing from the group NS, pixels belonging to the lowest value class and that step c) applies to the second group of NX pixels.

6. A position measuring method as claimed in any one of Claims 1 to 5, characterized, in that, the background which constitutes a low reference level for the determination of the value of the digital pixels is formed by the mean value of the pixels constituting the periphery of the measuring field.

7. Implementation of the position measuring method as claimed in any one of the preceding Claims to the manoeuvres of a manoeuvering satellite.
